(19) Europäisches Patentamt
European Patent Office
Office européen des brevets

(11) **EP 3 613 065 B1**

(12) **EUROPÄISCHE PATENTSCHRIFT**

(45) Veröffentlichungstag und Bekanntmachung des Hinweises auf die Patenterteilung:
**02.06.2021  Patentblatt 2021/22**

(21) Anmeldenummer: **18717912.2**

(22) Anmeldetag: **12.04.2018**

(51) Int Cl.:
**H01C 10/10** *(2006.01)*    **G01B 7/16** *(2006.01)*
**G01L 1/18** *(2006.01)*    **H01C 17/06** *(2006.01)*

(86) Internationale Anmeldenummer:
**PCT/EP2018/059433**

(87) Internationale Veröffentlichungsnummer:
**WO 2018/192837 (25.10.2018 Gazette 2018/43)**

(54) **SCHICHTWIDERSTAND UND DÜNNFILMSENSOR**

FILM RESISTOR AND THIN-FILM SENSOR

RÉSISTANCE EN COUCHE ET CAPTEUR À FILM MINCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2017  DE 102017108582**

(43) Veröffentlichungstag der Anmeldung:
**26.02.2020  Patentblatt 2020/09**

(73) Patentinhaber: **TDK Electronics AG**
**81671 München (DE)**

(72) Erfinder:
• **MILKE, Bettina**
**10783 Berlin (DE)**
• **OSTRICK, Bernhard**
**14513 Teltow (DE)**

(74) Vertreter: **Epping - Hermann - Fischer Patentanwaltsgesellschaft mbH Schloßschmidstraße 5 80639 München (DE)**

(56) Entgegenhaltungen:
GB-A- 2 151 398          US-A- 4 028 276
US-A- 4 651 120          US-A1- 2001 020 694
US-A1- 2004 074 306     US-A1- 2013 015 537

**Beschreibung**

Die vorliegende Erfindung betrifft einen Schichtwiderstand sowie einen Dünnfilmsensor, der den Schichtwiderstand aufweist.

Ein Schichtwiderstand kann eine piezoresistive Schicht aufweisen, an der zwei Elektroden angeordnet sind. In einem Dünnfilmsensor wird der Schichtwiderstand auf einer Membran aufgebracht, die an einem Trägerkörper befestigt ist und die relativ zu dem Träger schwingen kann oder die relativ zu dem Trägerkörper gebogen werden kann.

Um eine hohe Messgenauigkeit des Dünnfilmsensors zu ermöglichen, sollte es vermieden werden, dass während einer Messung mechanischer Stress zwischen dem Schichtwiderstand und der Membran oder dem Träger entsteht. Mechanischer Stress könnte beispielsweise durch unterschiedliche thermische Ausdehnungskoeffizienten entstehen.

Ferner sollte der Schichtwiderstand eine hohe Sensitivität aufweisen, um eine hohe Messgenauigkeit beispielsweise bei einer Druckmessung zu ermöglichen. Bei einem piezoresistiven Sensor kann die Sensitivität durch den k-Faktor, der auch als "Gage Faktor" bezeichnet wird, angegeben werden. Dieser beschreibt das Verhältnis zwischen relativer Widerstandsänderung ($\Delta R/R$) zu relativer Längenänderung ($\Delta L/L$) einer piezoresistiven Schicht. Der k-Faktor ist definert als

$$k = (\Delta R/R)/(\Delta L/L)$$

Dabei geben R den Widerstand der piezoresistiven Schicht, L die Länge der piezoresisitiven Schicht und $\Delta R$ eine Widerstandsänderung bei einer Längenänderung von $\Delta L$ an.

In einem Drucksensor ist der Schichtwiderstand üblicherweise einer zyklischen Biegebeanspruchung ausgesetzt. Daher ist es erforderlich, dass der Schichtwiderstand eine gute mechanische Stabilität aufweist. Aus diesem Grund sollte der Schichtwiderstand vorzugsweise einen geringen Elastizitätsmodul aufweisen.

US 4 028 276 A offenbart einen Schichtwiderstand aufweisend eine piezoresistive Schicht. Aufgabe der vorliegenden Erfindung ist es, einen verbesserten Schichtwiderstand anzugeben. Der Schichtwiderstand sollte vorzugsweise die oben genannten Anforderungen erfüllen. Ferner sollte der Schichtwiderstand vorzugsweise für den Einsatz in einem hohen Druckbereich, beispielsweise bei Drücken von bis zu 1000 bar, und in einem hohen Temperaturbereich, beispielsweise bei Temperaturen von bis zu 300 °C, einsetzbar sein.

Diese Aufgabe wird durch einen Schichtwiderstand gemäß dem vorliegenden Anspruch 1 gelöst.

Es wird ein Schichtwiderstand vorgeschlagen, der eine piezoresistive Schicht aufweist, die eine $M_{1+n}AX_n$-Phase aufweist, wobei M zumindest ein Übergangsmetall aufweist, A ein Hauptgruppenelement aufweist, X Kohlenstoff und/oder Stickstoff aufweist und wobei n = 1, 2 oder 3 ist.

Die $M_{1+n}AX_n$-Phasen kristallisieren in einer hexagonalen Schichtstruktur. Sie weisen $M_6X$-Oktaedern, die sich mit Schichten aus den A-Atomen abwechseln, auf. Es existieren 211-Phasen für n = 1, 312-Phasen für n = 2 und 413-Phasen für n = 3, bei denen die A-Schichten durch 2, 3 oder 4 Oktaeder-Schichten getrennt sind.

Die $M_{1+n}AX_n$-Phasen weisen verschiedene Eigenschaften auf, aufgrund derer sie besonders gut für den Einsatz in einer piezoresistiven Schicht eines Schichtwiderstands geeignet sind. Die $M_{1+n}AX_n$-Phasen sind metallisch leitend und hochtemperaturstabil. Dementsprechend können sie den Einsatz des Schichtwiderstands bei hohen Temperaturen ermöglichen.

Ihr thermischer Ausdehnungskoeffizient kann durch eine entsprechende Auswahl der Materialien der $M_{1+n}AX_n$-Phase an den Ausdehnungskoeffizienten einer Membran und eines Trägerkörpers angepasst werden, sodass sich aufgrund der aufeinander abgestimmten Ausdehnungskoeffizienten auch bei großen Temperaturänderungen keine mechanischen Spannungen bilden. Dementsprechend kann eine Temperaturquerempfindlichkeit des Dünnfilmsensors erheblich reduziert werden. Dadurch kann die Lebensdauer des Dünnfilmsensors erheblich verbessert werden, da der Schichtwiderstand auch nach einer großen Anzahl von Biegezyklen nicht beschädigt wird.

Die piezoresistive Schicht kann entweder aus der $M_{1+n}AX_n$-Phase bestehen oder neben der MAX-Phase weitere Bestandteile aufweisen. Beispielsweise kann die piezoresistive Schicht ein Gemisch aus der $M_{1+n}AX_n$-Phase und einem Oxid, einem Nitrid oder einem Carbid aufweisen.

Die $M_{1+n}AX_n$-Phase kann entweder eine reine $M_{1+n}AX_n$-Phase oder ein Mischkristall sein. Bei einer reinen $M_{1+n}AX_n$-Phase besteht M aus einem einzigen Übergangsmetall und X besteht entweder aus Kohlenstoff oder aus Stickstoff. Bei einem Mischkristall $(M1,M2)_{1+n}AX_n$ kann M durch zwei Übergangsmetalle M1, M2 gebildet werden. Alternativ oder ergänzend kann der Bestandteil X sowohl Kohlenstoff als auch Stickstoff aufweisen, so dass sich ein Mischkristall mit der Zusammensetzung $M_{1+n}A(C_yN_{1-y})_n$ und 0<y<1 ergibt. Möglich sind auch Mischkristalle $(M1, M2)_{1+n}A(C_yN_{1-y})_n$, bei denen M durch zwei Übergangsmetalle M1, M2 gebildet wird und der Bestandteil X sowohl Kohlenstoff als auch Stickstoff aufweist.

Durch die Verwendung von Mischkristallen $(M1,M2)_{1+n}AX_n$, $M_{1+n}A(C_yN_{1-y})_n$ oder $(M1, M2)_{1+n}A(C_yN_{1-y})_n$ können die physikalischen Eigenschaften der piezoresistiven Schicht in weiten Bereichen eingestellt werden. Durch die Verwendung von Mischkristallen können beispielsweise größere Härten und geringe Leitfähigkeiten der piezoresistiven Schicht erreicht werden als dies für eine piezoresistive Schicht möglich wäre, die aus einer reinen $M_{1+n}AX_n$-Phase besteht. Daher können Eigenschaften der piezoresisitven Schicht, die für ihre Verwendung in einem Dünnfilmsensor wesentlich sind, wie beispielsweise der thermische Ausdehnungskoeffizient, die Leitfähigkeit, der piezoresistive Effekt und die Härte der Schicht in gewünschter Weise eingestellt werden.

M kann zumindest eines aus Sc, Ti, V, Cr, Mn, Zr, Nb, Mo, Hf und Ta aufweisen. A kann eines aus Al, Si, P, S, Ga, Ge, As, Cd, In, Sn, Tl, Pb und Bi sein.

Die piezoresistive Schicht kann aus der $M_{1+n}AX_n$-Phase bestehen. Dementsprechend kann die piezoresistive Schicht neben der $M_{1+n}AX_n$-Phase keine weiteren Bestandteile aufweisen.

Alternativ kann die piezoresistive Schicht zusätzlich zu der $M_{1+n}AX_n$-Phase ein Oxid, ein Nitrid oder ein Carbid aufweisen. Dabei kann sich die $M_{1+n}AX_n$-Phase mit dem Oxid, dem Nitrid oder dem Carbid zu einem Festkörpergemisch verbinden. Ein Festkörpergemisch aus der $M_{1+n}AX_n$-Phase mit einem aus Oxiden, Nitriden oder Carbiden kann vorteilhaft sein, um die Leitfähigkeit der piezoresistiven Schicht gegenüber einer reinen $M_{1+n}AX_n$-Phase zu reduzieren und den piezoresistiven Effekt zu erhöhen. Ferner kann durch die Zusammensetzung der Schicht der thermische Ausdehnungskoeffizient in gewünschter Weise beeinflusst werden.

Bei der $M_{1+n}AX_n$-Phase, die zusammen mit dem Oxid, dem Nitrid oder dem Carbid ein Festkörpergemisch bildet, kann es sich um eine reine $M_{1+n}AX_n$-Phase oder um einen Mischkristall $(M1,M2)_{1+n}AX_n$, $M_{1+n}A(C_yN_{1-y})_n$ oder $(M1,M2)_{1+n}A(C_yN_{1-y})_n$ handeln.

Besteht die piezoresistive Schicht aus einer $M_{1+n}AX_n$-Phase und einem Oxid, so kann das Oxid zumindest teilweise als Oberflächenoxid der piezoresistiven Schicht vorliegen. Das Oxid kann stabile Oberflächenoxide auf den Körnern einer $M_{1+n}AX_n$-Phase bilden. Durch die Bildung von stabilen Oberflächenoxiden kann der Widerstandswert der Schicht erhöht werden und der piezoresistive Effekt optimiert werden, zum Beispiel in dem Tunneleffekte an den oxydischen Korngrenzbarrieren auftreten.

Die piezoresistive Schicht kann einen thermischen Ausdehnungskoeffizienten zwischen 8 ppm/K und 14 ppm/K aufweisen. Vorzugsweise liegt der thermische Ausdehnungskoeffizient zwischen 9 ppm/K und 12 ppm/K. Diese Ausdehnungskoeffizienten entsprechen den thermischen Ausdehnungskoeffizienten der Materialien, die üblicherweise für eine Membran und einen Trägerkörper verwendet werden, auf dem der Schichtwiderstand angeordnet wird. Durch die Anpassung der thermischen Ausdehnungskoeffizienten des Schichtwiderstands an den thermischen Ausdehnungskoeffizienten der Membran und des Trägerkörpers kann das Entstehen von mechanischem Stress bei Temperaturänderungen vermieden werden.

Die piezoresistive Schicht kann einen spezifischen Widerstand von mehr als 1 $\mu\Omega$/m bei einer Temperatur von 20 °C aufweisen. Dementsprechend kann die piezoresistive Schicht eine hohe Sensitivität bei einem geringen Rauschen bei Raumtemperatur aufweisen.

Die piezoresistive Schicht kann einen k-Faktor aufweisen, der größer als 2 ist. Der k-Faktor gibt das Verhältnis zwischen einer relativen Widerstandsänderung ($\Delta R/R$) zu einer relativen Längenänderung ($\Delta L/L$) der piezoresistiven Schicht an. Ein k-Faktor, der größer als 2 ist, ist gleichbedeutend mit einer hohen Sensitivität der piezoresistiven Schicht.

Gemäß einem weiteren Aspekt betrifft die vorliegende Erfindung einen Dünnfilmsensor, mit den im vorliegenden Anspruch 10 definierten Merkmalen, und der den oben beschriebenen Schichtwiderstand aufweist.

Der Dünnfilmsensor kann eine Membran, auf der der Schichtwiderstand angeordnet ist, und einen Trägerkörper aufweisen, an dem die Membran derart befestigt ist, dass die Membran sich relativ zu dem Trägerkörper bewegen kann. Insbesondere kann die Membran dazu ausgestaltet sein, relativ zu dem Körper zu schwingen und/oder relativ zu dem Trägerkörper gebogen zu werden.

Der Dünnfilmsensor kann mehrere der oben beschriebenen Schichtwiderstände aufweisen, die zu einer Brückenschaltung als Vollbrücke oder als Halbbrücke miteinander verschaltet sind. Die Schichtwiderstände können zumindest teilweise als Brücke oder Halbbrücke ausgelegt sein.

Einer der Schichtwiderstände kann zur Messung einer Temperatur in einem Bereich des Trägerkörpers oder der Membran angeordnet sein, der eine geringere Verformung erfährt als andere Bereiche des Trägerkörpers oder der Membran. Vorzugsweise erfährt der Bereich, in dem der Schichtwiderstände zur Messung einer Temperatur angeordnet ist, nur eine geringe Biegung.

Die Membran und der Trägerkörper können Edelstahl oder Yttrium stabilisiertes Zirkon aufweisen. Die piezoresistive Schicht kann derart ausgestaltet sein, dass ihr thermischer Ausdehnungskoeffizient identisch zu den thermischen Ausdehnungskoeffizienten dieser Materialien ist oder zumindest von den thermischen Ausdehnungskoeffizienten dieser Materialien nur geringfügig abweicht. Da die piezoresistive Schicht eine $M_{1+n}AX_n$-Phasen aufweist, ist es möglich, die piezoresisitve Schicht derart auszugestalten, dass ihr thermischer Ausdehnungskoeffizient an die Materialien der Membran und des Trägerkörpers angepasst ist.

Alternativ können die Membran und der Trägerkörper aus einer $M_{1+n}AX_n$-Phase bestehen, wobei M zumindest ein Übergangsmetall aufweist, A ein Hauptgruppenelement aufweist, X Kohlenstoff und/oder Stickstoff aufweist, und wobei n = 1, 2 oder 3 ist. Dabei kann es sich um die gleiche $M_{1+n}AX_n$-Phase handeln, die auch die piezoresistive Schicht aufweist. Alternativ kann es sich um eine $M_{1+n}AX_n$-Phase handeln, die von der $M_{1+n}AX_n$-Phase der piezoresistiven Schicht verschieden ist. Der Dünnfilmsensor kann ferner einen Isolator aufweisen, der die piezoresistive Schicht von dem Trägerkörper und der Membran isoliert. Weisen die piezoresistive Schicht sowie die Membran und der Trägerkörper das gleiche Material auf, ist das Entstehen von mechanischem Stress aufgrund von unterschiedlichen thermischen Ausdehnungskoeffizienten ausgeschlossen. Dadurch kann eine lange Lebensdauer des Dünnfilmsensors ermöglicht werden. Der Isolator kann verhindern, dass ein Strom von der piezoresistiven Schicht zu der Membran fließt. Selbst wenn die $M_{1+n}AX_n$-Phase, die die Membran und der Trägerkörper bzw. die piezoresistive Schicht aufweisen, voneinander abweichen, sind ihre thermischen Ausdehnungskoeffizienten einander sehr ähnlich.

Im Folgenden wird die vorliegende Erfindung anhand der beiliegenden Figuren erläutert.

Figur 1 zeigt einen Dünnfilmsensor gemäß einem ersten Ausführungsbeispiel.

Figur 2 zeigt einen Dünnfilmsensor gemäß einem zweiten Ausführungsbeispiel.

Figur 3 zeigt einen Dünnfilmsensor gemäß einem dritten Ausführungsbeispiel.

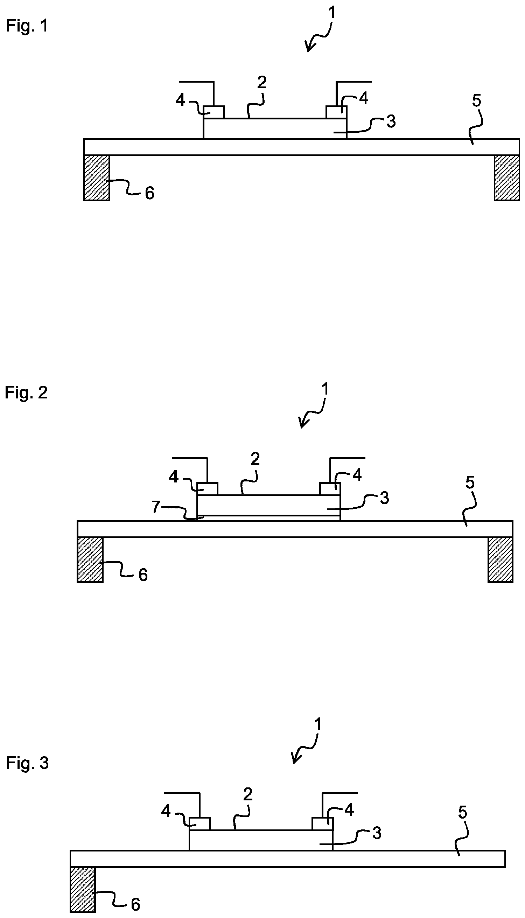

Figur 1 zeigt einen Dünnfilmsensor 1, der einen Schichtwiderstand 2 mit einer piezoresistiven Schicht 3 aufweist. Der Schichtwiderstand 2 weist ferner zwei Elektroden 4 auf. Die Elektroden 4 sind an entgegengesetzten Enden der piezoresistiven Schicht 3 angeordnet.

Der Dünnfilmsensor 1 weist eine Membran 5 und einen Trägerkörper 6 auf. Die Membran 5 ist an dem Trägerkörper 6 derart befestigt, dass die Membran 5 sich relativ zu dem Trägerkörper 6 bewegen kann. Insbesondere kann die Membran 5 relativ zu dem Körper 6 schwingen. Dabei kann ein mittlerer Bereich der Membran 5 gebogen werden. Der Schichtwiderstand 2 ist auf der Membran 5 angeordnet. Die piezoresisitive Schicht 3 kann dazu unmittelbar auf der Membran 5 abgeschieden sein. Insbesondere ist der Schichtwiderstand 2 in dem Bereich der Membran 5 angeordnet, der relativ zu dem Trägerkörper 6 beweglich ist.

Verformt sich nunmehr die Membran 5 in Folge eines auf sie ausgeübten Drucks, führt dieses zu einer Verformung der piezoresistiven Schicht 3. Dabei entsteht aufgrund des piezoelektrischen Effektes entsteht ein elektrisches Signal, das von den Elektroden 4 erfasst werden kann.

Vorzugsweise weist der Dünnfilmsensor 1 vier Schichtwiderstände 2 auf, die zu einer elektrischen Widerstandbrücke verschaltet sind. Bei der Widerstandsbrücke handelt es sich vorzugsweise um eine Wheatstonebrücke. Auf Basis der von diesen Schichtwiderständen 2 erfassten elektrischen Signale kann ein auf den Dünnfilmsensor 1 ausgeübter Druck berechnet werden.

Der hier beschriebene Dünnfilmsensor 1 eignet sich neben der Messung eines Drucks auch zur Messung von Kräften sowie zur Messung einer Dehnung der Membran 5.

Die piezoresistive Schicht 3 kann eine $M_{1+n}AX_n$-Phase aufweisen. Dabei kann die piezoresistive Schicht 3 eine reine $M_{1+n}AX_n$-Phase oder Mischphasen $(M1, M2)_{1+n}AX_n$, $M_{1+n}A(C_yN_{1-y})_n$ oder $(M1, M2)_{1+n}A(C_yN_{1-y})_n$ aufweisen. Die piezoresistive Schicht 3 kann entweder aus der $M_{1+n}AX_n$-Phase bestehen oder ein Gemisch aus der $M_{1+n}AX_n$-Phase mit einem Oxid, einem Nitrid oder einem Carbid aufweisen.

Die Membran 5 und der Trägerkörper 6 können Edelstahl oder Yttrium stabilisiertes Zirkon aufweisen. Die piezoresistive Schicht 3 weist einen thermischen Ausdehnungskoeffizienten auf, der nur geringfügig von den thermischen Ausdehnungskoeffizienten der Membran 5 und des Trägerkörpers 6 abweicht. Alternativ können die Membran 5 und der Trägerkörper 6 auch ein keramisches Material oder ein Metall aufweisen oder aus dem keramischen Material oder dem Metall bestehen.

Die in Figur 1 gezeigte piezoresisitive Schicht 3 ist quaderförmig. Alternativ kann die piezoresistive Schicht 3 mäanderförmig sein. Eine Mäanderform weist gegenüber der Quaderform den Vorteil einer größeren Länge zwischen den beiden Elektroden 4 bei gleichen Volumen auf.

Figur 2 zeigt ein zweites Ausführungsbeispiel des Dünnfilmsensors 1. Hier bestehen die Membran 5 und der Trägerkörper 6 aus dem gleichen Material wie die piezoresistive Schicht 3. Um elektrische Kurzschlüsse zwischen der Membran 5 und der piezoresistiven Schicht 3 zu vermeiden, ist ferner ein Isolator 7 zwischen der piezoresistiven Schicht 3 und der Membran 5 angeordnet. Der Isolator 7 ist eine Schicht, die aus einem nicht-leitenden Material besteht.

Figur 3 zeigt ein drittes Ausführungsbeispiel, bei dem die Membran 5 nur einseitig an dem Trägerkörper 6 befestigt ist. Dementsprechend kann die Membran 5 relativ zu dem Trägerkörper 6 gebogen werden.

Bezugszeichenliste

1     Dünnfilmsensor
2     Schichtwiderstand
3     piezoresistive Schicht
4     Elektrode
5     Membran
6     Trägerkörper
7     Isolator

**Patentansprüche**

1. Schichtwiderstand (2) aufweisend eine piezoresistive Schicht (3),
   wobei die piezoresistive Schicht (3) eine $M_{1+n}AX_n$-Phase aufweist, wobei M zumindest ein Übergangsmetall aufweist, A ein Hauptgruppenelement aufweist, X Kohlenstoff und/oder Stickstoff aufweist, und wobei n = 1, 2 oder 3 ist.

**2.** Schichtwiderstand (2) gemäß Anspruch 1, wobei M aus einem einzigen Übergangsmetall besteht oder wobei M zwei Übergangsmetalle M1, M2 aufweist.

**3.** Schichtwiderstand (2) gemäß einem der vorherigen Ansprüche, wobei M zumindest eines aus Sc, Ti, V, Cr, Mn, Zr, Nb, Mo, Hf und Ta aufweist, und wobei A eines aus Al, Si, P, S, Ga, Ge, As, Cd, In, Sn, Tl, Pb und Bi ist.

**4.** Schichtwiderstand (2) gemäß Anspruch 1, wobei die piezoresistive Schicht (3) aus der $M_{1+n}A$-$X_n$-Phase besteht.

**5.** Schichtwiderstand (2) gemäß einem der Ansprüche 1 bis 3, wobei die piezoresistive Schicht (3) ein Oxid, ein Nitrid oder ein Carbid aufweist.

**6.** Schichtwiderstand (2) gemäß Anspruch 5, wobei das Oxid zumindest teilweise als Oberflächenoxid der piezoresistiven Schicht (3) vorliegt.

**7.** Schichtwiderstand (2) gemäß einem der vorherigen Ansprüche, wobei die piezoresistive Schicht (3) einen thermischen Ausdehnungskoeffizienten zwischen 8 ppm/K und 14 ppm/K aufweist.

**8.** Schichtwiderstand (2) gemäß einem der vorherigen Ansprüche, wobei die piezoresistive Schicht (3) einen spezifischen Widerstand von mehr als 1 $\mu\Omega/m$ bei einer Temperatur von 20 °C aufweist.

**9.** Schichtwiderstand (2) gemäß einem der vorherigen Ansprüche, wobei die piezoresistive Schicht (3) einen k-Faktor, der das Verhältnis zwischen einer relativen Widerstandsänderung ($\Delta R/R$) zu einer relativen Längenänderung ($\Delta L/L$) der piezoresistiven Schicht (3) angibt, von größer als 2 aufweisen.

**10.** Dünnfilmsensor (1) aufweisend einen Schichtwiderstand (2) gemäß einem der vorherigen Ansprüche.

**11.** Dünnfilmsensor (1) gemäß dem vorherigen Anspruch, aufweisend eine Membran (5), auf der der Schichtwiderstand (2) angeordnet ist, und einen Trägerkörper (6), an dem die Membran (5) derart befestigt ist, dass die Membran (5) sich relativ zu dem Trägerkörper (6) bewegen kann.

**12.** Dünnfilmsensor (1) gemäß einem der Ansprüche 10 oder 11, wobei der Dünnfilmsensor (1) mehrere Schichtwiderstände (2) gemäß einem der Ansprüche 1 bis 9 aufweist, die zu einer Brückenschaltung als Vollbrücke oder als Halbbrücke miteinander verschaltet sind.

**13.** Dünnfilmsensor (1) gemäß dem vorherigen Anspruch, wobei einer der Schichtwiderstände (2) zur Messung einer Temperatur in einem Bereich des Trägerkörpers (6) oder der Membran (5) angeordnet ist, der eine geringere Verformung erfährt als andere Bereiche des Trägerkörpers (6) oder der Membran (5).

**14.** Dünnfilmsensor (1) gemäß einem der Ansprüche 11 bis 13, wobei die Membran (5) und der Trägerkörper (6) Edelstahl oder Yttrium stabilisiertes Zirkon aufweisen.

**15.** Dünnfilmsensor (1) gemäß einem der Ansprüche 11 bis 13, wobei die Membran (5) und der Trägerkörper (6) aus einer $M_{1+n}AX_n$-Phase bestehen, wobei M zumindest ein Übergangsmetall aufweist, A ein Hauptgruppenelement aufweist, X Kohlenstoff und/oder Stickstoff aufweist, und wobei n = 1, 2 oder 3 ist, und wobei der Dünnfilmsensor (1) einen Isolator aufweist, der die piezoresistive Schicht (3) von dem Trägerkörper (6) und der Membran (5) isoliert.

**Claims**

**1.** A film resistor (2) having a piezoresistive layer (3), wherein the piezoresistive layer (3) has a $M_{1+n}AX_n$ phase, wherein M has at least one transition metal, A has a main-group element, X has carbon and/or nitrogen, and wherein n = 1, 2 or 3.

**2.** The film resistor (2) according to Claim 1, wherein M consists of a single transition metal or wherein M has two transition metals M1, M2.

**3.** The film resistor (2) according to any one of the preceding claims, wherein M has at least one of Sc, Ti, V, Cr, Mn, Zr, Nb, Mo, Hf and Ta, and wherein A is one of Al, Si, P, S, Ga, Ge, As, Cd, In, Sn, Tl, Pb and Bi.

**4.** The film resistor (2) according to Claim 1, wherein the piezoresistive layer (3) consists of the $M_{1+n}AX_n$ phase.

**5.** The film resistor (2) according to any one of Claims 1 to 3,
wherein the piezoresistive layer (3) has an oxide, a nitride or a carbide.

6. The film resistor (2) according to Claim 5,
wherein the oxide is present at least in part as a surface oxide of the piezoresistive layer (3).

7. The film resistor (2) according to any one of the preceding claims,
wherein the piezoresistive layer (3) has a coefficient of thermal expansion of between 8 ppm/K and 14 ppm/K.

8. The film resistor (2) according to any one of the preceding claims,
wherein the piezoresistive layer (3) has a specific resistance of more than 1 $\mu\Omega$/m at a temperature of 20°C.

9. The film resistor (2) according to any one of the preceding claims,
wherein the piezoresistive layer (3) has a k factor, which indicates the ratio of a relative change in resistance ($\Delta R/R$) to a relative change in length ($\Delta L/L$) of the piezoresistive layer (3), of greater than 2.

10. A thin-film sensor (1) having a film resistor (2) according to any one of the preceding claims.

11. The thin-film sensor (1) according to the preceding claim,
having a membrane (5), on which the film resistor (2) is arranged, and a carrier body (6), to which the membrane (5) is fastened such that the membrane (5) can move relative to the carrier body (6).

12. The thin-film sensor (1) according to any one of Claims 10 or 11,
wherein the thin-film sensor (1) has multiple film resistors (2) according to any one of Claims 1 to 9, which are connected to one another to form a bridge circuit in the form of a full bridge or a half bridge.

13. The thin-film sensor (1) according to the preceding claim,
wherein, in order to measure a temperature, one of the film resistors (2) is arranged in a region of the carrier body (6) or the membrane (5), which undergoes less deformation than other regions of the carrier body (6) or the membrane (5).

14. The thin-film sensor (1) according to any one of Claims 11 to 13,
wherein the membrane (5) and the carrier body (6) have stainless steel or yttrium-stabilized zirconium.

15. The thin-film sensor (1) according to any one of Claims 11 to 13,
wherein the membrane (5) and the carrier body (6) consist of a $M_{1+n}AX_n$ phase, wherein M has at least one transition metal, A has a main-group element, X has carbon and/or nitrogen, and wherein n = 1, 2 or 3, and wherein the thin-film sensor (1) has an insulator which insulates the piezoresistive layer (3) from the carrier body (6) and the membrane (5).

**Revendications**

1. Résistance film (2) présentant une couche piézorésistante (3) ;
la couche piézorésistante (3) présentant une phase $M_{1+n}AX_n$, M présentant au moins un métal de transition, A présentant un élément de groupe principal, X représentant du carbone et/ou de l'azote et n = 1, 2 ou 3.

2. Résistance film (2) selon la revendication 1,
M étant constitué par un seul métal de transition ou M présentant deux métaux de transition M1, M2.

3. Résistance film (2) selon l'une quelconque des revendications précédentes,
M présentant au moins un élément parmi Sc, Ti, V, Cr, Mn, Zr, Nb, Mo, Hf et Ta et
A étant un élément parmi Al, Si, P, S, Ga, Ge, As, Cd, In, Sn, Tl, Pb et Bi.

4. Résistance film (2) selon la revendication 1,
la couche piézorésistante (3) étant constituée par la phase $M_{1+n}AX_n$.

5. Résistance film (2) selon l'une quelconque des revendications 1 à 3,
la couche piézorésistante (3) présentant un oxyde, un nitrure ou un carbure.

6. Résistance film (2) selon la revendication 5,
l'oxyde se trouvant au moins partiellement sous forme d'oxyde de surface de la couche piézorésistante (3).

7. Résistance film (2) selon l'une quelconque des revendications précédentes,
la couche piézorésistante (3) présentant un coefficient de dilatation thermique entre 8 ppm/K et 14 ppm/K.

8. Résistance film (2) selon l'une quelconque des revendications précédentes,
la couche piézorésistante (3) présentant une résistance spécifique de plus de 1 $\mu\Omega$/m à une température de 20°C.

9. Résistance film (2) selon l'une quelconque des revendications précédentes,
la couche piézorésistante (3) présentant un facteur k, qui indique le rapport entre une modification relative de résistance ($\Delta R/R$) et une modification relative de la longueur ($\Delta L/L$) de la couche piézorésistante (3), supérieur à 2.

10. Capteur à film mince (1) présentant une résistance film (2) selon l'une quelconque des revendications précédentes.

11. Capteur à film mince (1) selon la revendication précédente,
présentant une membrane (5), sur laquelle la résistance film (2) est disposée, et un corps support (6), sur lequel la membrane (5) est fixée de manière telle que la membrane (5) peut bouger par rapport au corps support (6).

12. Capteur à film mince (1) selon l'une quelconque des revendications 10 ou 11,
le capteur à film mince (1) présentant plusieurs résistances film (2) selon l'une quelconque des revendications 1 à 9, qui sont connectées les unes aux autres en circuit de pont en tant que pont intégral ou que demi-pont.

13. Capteur à film mince (1) selon la revendication précédente,
l'une des résistances film (2) étant agencée, pour la mesure d'une température, dans une zone du corps support (6) ou de la membrane (5), qui subit une déformation moindre que celle des autres zones du corps support (6) ou de la membrane (5).

14. Capteur à film mince (1) selon l'une quelconque des revendications 11 à 13,
la membrane (5) et le corps support (6) présentant de l'acier inoxydable ou de la zircone stabilisée par de l'yttrium.

15. Capteur à film mince (1) selon l'une quelconque des revendications 11 à 13,
la membrane (5) et le corps support (6) étant constitués par une phase $M_{1+n}AX_n$, M présentant au moins un métal de transition, A présentant un élément de groupe principal, X représentant du carbone et/ou de l'azote,
et n = 1, 2 ou 3 et le capteur à film mince (1) présentant un isolant qui isole la couche piézorésistante (3) par rapport au corps support (6) et à la membrane (5).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4028276 A